# EUROPEAN PATENT APPLICATION

(11) **EP 4 821 342 A1**
(43) Date of publication of application: **14.10.2026**
(21) Application number: 26171143.6
(22) Date of filing: 08.04.2026
(51) Int. Cl.: A01D 34/76, A01D 69/02, A01D 34/66

(54) **COMPACT STAND-ON UTILITY VEHICLE**

(30) Priority: 09.04.2025 US 202563785819 P
(71) Applicant: MTD Products Inc., Valley City, OH 44280 (US)
(72) Inventor: MAGGARD, Jay, Valley City, 44280 (US); KUCERA, Jeff, Valley City, 44280 (US); GANZEMILLER, Austin, Valley City, 44280 (US); ROSINSKI, Garrett, Valley City, 44280 (US); MALERNEE, Nicole, Valley City, 44280 (US)
(74) Representative: SBD IPAdmin

(57) **Abstract**

A compact powered utility vehicle can have a mow deck and blade assembly for trimming vegetation on a surface. A support platform can be provided for the vehicle for transporting material(s), cargo, a machine(s), a tool(s), cut vegetation clippings, or other material. The powered utility vehicle can comprise both a mow deck and blade assembly and an operator platform for a standing operator, that positions an operator near, over or forward of a rear rotation axis of the powered utility vehicle. A prime mover of the powered utility vehicle can be positioned forward on the vehicle frame relative to the blade assembly, and power can be transferred at least in part from the prime mover (directly or indirectly) rearward from the prime mover to the blade assembly to power a blade within the mow deck.

## Description

This application claims the benefit of U.S. Provisional Patent Application No. 63/785,819, filed April 9, 2025, and titled "COMPACT STAND-ON UTILITY VEHICLE", which is hereby incorporated by reference within the present disclosure in its entirety and for all purposes.

The disclosed subject matter pertains to apparatuses such as powered utility vehicles; for example: compact powered stand-on utility vehicles.

Manufacturers of vehicles for utility applications offer many types of machines. Generally, these machines can have a variety of forms depending on application, from general urban or suburban lawn maintenance, rural farm and field maintenance, to specialty applications. Furthermore, utility vehicles for residential applications can have features desired by end users of these applications.

Outdoor maintenance vehicles for residential applications may include equipment adapted to perform or assist with mowing, trimming, edging, blowing, chipping, spreading, spraying, vacuuming, raking, tilling, or other tasks of interest. While the uses and applications for an outdoor maintenance vehicle can be numerous, some common requirements continue to present challenges.

Modern maintenance machines also offer multiple options for a power source. The various advantages associated with electric motors, gasoline engines, natural gas engines, diesel engines and so forth also impact the mechanical design and engineering that go into these different maintenance devices. Meeting the various challenges associated with different maintenance and mowing applications and the benefits and limitations of different power sources results in a large variety of maintenance machines to meet consumer preferences. It remains desirable to develop utility vehicles for outdoor applications having a form factor that promotes storage, transport, and that are lightweight for an operator to move and handle when powered or unpowered, while being capable of powering and deploying a wide variety of tools and systems.

### SUMMARY

The following presents a simplified summary in order to provide a basic understanding of some aspects of the disclosure. This summary is not an extensive overview of the disclosure. It is not intended to identify key/critical elements or to delineate the scope of the disclosure. Its sole purpose is to present some concepts of the disclosure in a simplified form as a prelude to the more detailed description that is presented later.

Aspects of the present disclosure provide a compact powered utility vehicle. The powered utility vehicle can comprise a mow deck and blade assembly for trimming vegetation on a surface, in some disclosed aspects. The powered utility vehicle can comprise a support platform for transporting material(s), cargo, a machine(s), a tool(s), cut vegetation clippings, or other material in alternative or additional aspects of the disclosure. In still additional aspects, the powered utility vehicle can comprise both a mow deck and blade assembly and a support platform. Various aspects of disclosed powered utility vehicles can provide an operator platform for a standing operator, that positions an operator near, over or forward of a rear rotation axis of the powered utility vehicle. A prime mover of the powered utility vehicle (*e.g.,* a combustion engine, an electric motor, a pneumatic motor, a hydraulic motor, *etc.*) can be positioned forward on the vehicle frame relative to the blade assembly, and power can be transferred at least in part from the prime mover (directly or indirectly) to the blade assembly to power a blade within the mow deck. In alternative or additional aspects of the disclosed embodiments, a disclosed powered utility vehicle can have a wheelbase less than about forty eight (48) inches, a track width less than about thirty five (35) inches, or a combination thereof. In at least some aspects of the disclosed embodiments, the powered utility vehicle can have a wheelbase less than about forty (40) inches and a track width less than about thirty two (32) inches. The disclosed embodiments therefore provide a compact powered utility vehicle that can be advantageous for commercial use, residential use and particularly advantageous for increased maneuverability and compact storage.

In a further aspect of the disclosed embodiments, provided is a stand-on mowing apparatus. The stand-on mowing apparatus can comprise a frame, the frame having a frame front and a frame rear offset from the frame front in a depth direction by a frame depth and a drive element secured to the frame near the frame rear and adapted to, at least in part, convey the stand-on mowing apparatus over a surface. In addition, the stand-on mowing apparatus can comprise an operator platform secured to the frame near the frame rear and having a platform front offset from a platform rear by a platform depth. In some aspects of the disclosed embodiments, a centerline of the platform depth is offset from a drive axis of the drive element in a first depth direction toward the frame rear by six inches or fewer. Still further, the stand-on mowing apparatus can comprise a mow deck secured to the frame, a blade assembly including a blade drive and a blade, operationally coupled to the blade drive, which rotates within the mow deck about a blade rotation axis in response to mechanical work provided by the blade drive to the blade. Moreover, the stand-on mowing apparatus can comprise a combustion engine for generating mechanical power at an engine drive shaft; and a mechanical coupler for transferring the mechanical power from the engine drive shaft to the blade drive of the blade assembly.

In an aspect, there is provided a stand-on mowing apparatus, comprising: a frame, the frame having a frame front and a frame rear offset from the frame front in a depth direction by a frame depth; a drive element secured to the frame near the frame rear and adapted to, at least in part, convey the stand-on mowing apparatus over a surface;an operator platform secured to the frame near the frame rear and having a platform front offset from a platform rear by a platform depth, wherein a centerline of the platform depth is offset from a drive axis of the drive element in a first depth direction toward the frame rear by six inches or fewer; a mow deck secured to the frame between the frame front and the frame rear; a blade assembly including a blade drive and a blade operationally coupled to the blade drive, wherein the blade rotates within the mow deck about a blade rotation axis in response to mechanical work provided by the blade drive to the blade; a prime mover for generating mechanical power at a drive shaft; and a mechanical coupler for transferring the mechanical power from the drive shaft to the blade drive of the blade assembly.

Optionally, the centerline of the platform depth is approximately equal to the drive axis or is offset from the drive axis in a second depth direction toward the frame front.

Optionally, the drive shaft is positioned forward of the blade drive in a second depth direction toward the frame front, and the mechanical coupler transfers the mechanical power in the first depth direction toward the frame rear from the drive shaft to the blade drive.

Optionally: the prime mover is positioned forward of the blade assembly in a second depth direction toward the frame front; and a center of mass of the combustion engine is offset from the blade drive in the second depth direction, wherein the prime mover is offset by one of: a first range of eighteen or fewer inches, fifteen or fewer inches, twelve or fewer inches, ten or fewer inches, eight or fewer inches or six or fewer inches from the blade drive in the second depth direction.

Optionally, the drive element further comprises: a left rotation and drive element secured to a left side of the frame near the frame rear; and a right rotation and drive element secured to a right side of the frame near the frame rear and wherein the operator platform is positioned between the left side of the frame and the right side of the frame and at least in part between the left rotation and drive element and the right rotation and drive element.

Optionally: the left rotation and drive element includes a left rotation element and a left drive element, the left drive element further comprises one or more electric motors and a left transmission adapted to transfer mechanical power generated by the electric motors to rotate the left rotation element, wherein the left transmission and the one or more electric motors are contained within a housing located between the left side of the frame near the frame rear and the left rotation element; the right rotation and drive element includes a right rotation element and a right drive element, the right drive element further comprises one or more additional electric motors and a right transmission, wherein the right transmission and the one or more additional electric motors are contained within a second housing located between the right side of the frame near the frame rear and the right rotation element; and the operator platform is positioned at least in part between the housing containing the one or more electric motors and the left transmission and the second housing containing the one or more additional electric motors and the right transmission.

Optionally, the stand-on mowing apparatus further comprises: a charge generator operationally coupled to the engine drive shaft, the blade drive or the mechanical coupler, wherein the charge generator is adapted to generate electrical charge in response to mechanical power generated by the prime mover; a battery for storing the electrical charge; and a charge controller for powering the one or more electric motors from the electrical charge, wherein, optionally, the prime mover is a combustion engine.

Optionally, the stand-on mowing apparatus further comprises a support wheel secured to the frame near the frame front, wherein the center of mass of the combustion engine is eighteen inches or less from a support wheel rotation axis of the support wheel.

Optionally, the center of mass of the combustion engine is eight inches or less from the support wheel rotation axis of the support wheel when the stand-on mowing apparatus is moving in a forward direction.

Optionally: the drive element further comprises a right drive element secured to a right side of the frame, a left drive element secured to a left side of the frame and a support wheel secured to a front of the frame, wherein a distance between the right drive element and the left drive element defines a track width of the stand-on mowing apparatus, and a second distance between a drive element rotation axis of the right drive element and a support rotation axis of the support wheel defines a wheelbase of the stand-on mowing apparatus; the wheelbase is less than about forty eight (48) inches; or the track width is less than about thirty six (36) inches.

Optionally: the wheelbase is less than about one of: forty four (44) inches, forty (40) inches, thirty six (36) inches, or thirty four inches; and/or the track width is less than about one of: thirty four (34) inches, thirty three (33) inches, thirty two (32) inches or thirty one inches.

Optionally, the prime mover is secured to the frame toward the frame front forward of the blade drive of the blade assembly.

Optionally, the blade drive defines a blade spindle rotation axis and a distance between a center of mass of the prime mover and the blade spindle rotation axis is about eighteen to about six inches.

Optionally, a distance between a center of mass of the prime mover and the blade rotation axis is greater than six inches.

Optionally: the distance between a center of mass of the prime mover and the blade rotation axis is greater than twelve inches; and/or the distance between a center of mass of the prime mover and the blade rotation axis is eighteen inches or less.

In another aspect, there is provided stand-on mowing apparatus, comprising: a frame, the frame having a frame front and a frame rear offset from the frame front in a depth direction by a frame depth; a right drive element secured to a right side of the frame, a left drive element secured to a left side of the frame and a support wheel secured to a front of the frame, wherein a distance between the right drive element and the left drive element defines a track width of the stand-on mowing apparatus, and a second distance between a drive element rotation axis of the right drive element and a support rotation axis of the support wheel defines a wheelbase of the stand-on mowing apparatus; an operator platform secured to the frame near the frame rear and having a platform front offset from a platform rear by a platform depth; a mow deck secured to the frame between the frame front and the frame rear; a blade assembly including a blade drive and a blade operationally coupled to the blade drive, wherein the blade rotates within the mow deck about a blade rotation axis; and a prime mover for generating mechanical power at a drive shaft, wherein at least one of: the wheelbase is less than about forty eight (48) inches; or the track width is less than about thirty six (36) inches.

Optionally, the wheelbase is less than about one of: forty four (44) inches, forty (40) inches, thirty six (36) inches, or thirty four inches.

Optionally, the track width is less than about one of: thirty four (34) inches, thirty three (33) inches, thirty two (32) inches or thirty one inches.

Optionally, the prime mover is secured to the frame toward the frame front forward of the blade drive of the blade assembly.

Optionally, the blade drive defines a blade spindle rotation axis and a distance between a center of mass of the prime mover and the blade spindle rotation axis is about eighteen to about six inches.

Optionally, the distance is between about twelve to about six inches.

In another aspect, there is provided a stand-on mowing apparatus, comprising: a frame, the frame having a frame front and a frame rear offset from the frame front in a depth direction by a frame depth; a right drive element secured to a right side of the frame, a left drive element secured to a left side of the frame and a support wheel secured to a front of the frame; an operator platform secured to the frame near the frame rear and having a platform front offset from a platform rear by a platform depth; a mow deck secured to the frame between the frame front and the frame rear; a blade assembly including a blade drive and a blade operationally coupled to the blade drive, wherein the blade rotates within the mow deck about a blade rotation axis; and a prime mover for generating mechanical power at a drive shaft and secured to the frame forward of the blade assembly toward the frame front, wherein a distance between a center of mass of the prime mover and the blade rotation axis is greater than six inches.

Optionally, the distance is greater than twelve inches.

Optionally, the distance is eighteen inches or less.

Optionally, a distance between the right drive element and the left drive element defines a track width of the stand-on mowing apparatus, and a second distance between a drive element rotation axis of the right drive element and a support rotation axis of the support wheel defines a wheelbase of the stand-on mowing apparatus.

Optionally, at least one of: the wheelbase is less than about forty eight (48) inches or the track width is less than about thirty six (36) inches.

To accomplish the foregoing and related ends, certain illustrative aspects of the disclosure are described herein in connection with the following description and the drawings. These aspects are indicative, however, of but a few of the various ways in which the principles of the disclosure can be employed and the subject disclosure is intended to include all such aspects and their equivalents. Other advantages and features of the disclosure will become apparent from the following detailed description of the disclosure when considered in conjunction with the drawings.

### BRIEF DESCRIPTION OF THE DRAWINGS

Figure 1 depicts a side perspective view of an example powered utility vehicle in aspects of the disclosed embodiments;
Figure 1A illustrates multiple views of a powered utility vehicle according to further aspects of the disclosed embodiments;
Figure 1B depicts a view of an example hybrid combustion and electric-powered utility vehicle according to alternative or additional aspects of the present disclosure;
Figures 1C, 1D, 1E, 1F, 1G, 1H and 1I provide drawings of removable utility attachments secured to a disclosed powered utility vehicle, in further aspects of the disclosure;
Figure 2 depicts a rear perspective view of an example hybrid combustion and electric-powered utility vehicle in further aspects of the present disclosure;
Figure 3 depicts a side view of the hybrid combustion and electric-powered utility vehicle in still other aspects of the disclosure;
Figure 4 illustrates a front view of the hybrid combustion and electric-powered utility vehicle in yet additional aspects of the disclosed embodiments;
Figure 5 depicts a rear view of the hybrid combustion and electric-powered utility vehicle in still additional aspects of the disclosed embodiments;
Figure 6 depicts a front perspective view of an example hybrid combustion and electric-powered utility vehicle in still further aspects of the present disclosure;
Figure 7 illustrates a bottom perspective view of the example hybrid combustion and electric-powered utility vehicle in one or more other aspects of the disclosure;
Figure 7A depicts a side wireframe view with frame and mow deck surfaces hidden to show mechanical coupling from a prime mover in further disclosed aspects;
Figures 8 and 8A illustrate bottom and top views, respectively of a hybrid and electric-powered stand-on mowing device in further aspects of the disclosed embodiments;
Figure 9 illustrates a front perspective view of an example hybrid and electric-powered riding lawnmower according to alternative or additional aspects of the disclosure;
Figure 10 is an overhead perspective view of a sample mow deck and frame of a hybrid combustion and electric-powered stand-on mowing device in further disclosed aspects;
Figure 10A depicts a bottom perspective image of a sample mow deck and frame of a hybrid stand-on mowing device according to still further aspects of the disclosure;

It should be noted that the drawings are diagrammatic and not drawn to scale. Relative dimensions and proportions of parts of the figures have been shown exaggerated or reduced in size for the sake of clarity and convenience in the drawings. The same reference numbers are generally used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to a battery-powered utility vehicle for residential applications are described herein, it should be understood that the disclosed machines, electronic apparatus and computing devices and methods are not so limited and modifications may be made without departing from the scope of the present disclosure. The scope of the machines, apparatuses, methods, and devices are defined by the appended claims, and all devices, processes, and methods that come within the meaning of the claims, either literally or by equivalence, are intended to be embraced therein.

### DETAILED DESCRIPTION

The following terms are used throughout the description, the definitions of which are provided herein to assist in understanding various aspects of the subject disclosure.

As used in this application, the terms "outdoor power equipment", "outdoor power equipment machine", "power equipment", "maintenance machine", "power equipment machine", and "utility vehicle" are used interchangeably and are intended to refer to any of robotic, partially robotic ride-on, walk-behind, stand-on, sulky equipped, autonomous, semi-autonomous (*e.g*., user-assisted automation), remote control, or multi-function variants of any of the following: powered carts and wheelbarrows, lawn mowers, lawn and garden tractors, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment.

As utilized herein, relative terms or terms of degree such as approximately, substantially, about, roughly and so forth, are intended to incorporate ranges and variations about a qualified term reasonably encountered by one of ordinary skill in the art in fabricating or compiling the embodiments disclosed herein, where not explicitly specified otherwise. For instance, a relative term can refer to ranges of manufacturing tolerances associated with suitable manufacturing equipment (*e.g*., injection molding equipment, extrusion equipment, metal stamping equipment, and so forth) for realizing a mechanical structure from a disclosed illustration or description. In some embodiments, depending on context and the capabilities of one of ordinary skill in the art, relative terminology can refer to a variation in a disclosed value or characteristic, *e.g*., a 0 to five-percent variance or a zero to ten-percent variance from precise mathematically defined value or characteristic (which is included in the range), or any suitable value or range there between can define a scope for a disclosed term of degree. As an example, a power equipment device can have an operating dimension, such as a heading measurement, average velocity estimate, relative position estimate, or the like, with a variance of 0 to five percent or 0 to ten percent. As another example, a disclosed mechanical dimension can have a variance of suitable manufacturing tolerances as would be understood by one of ordinary skill in the art, or a variance of a few to several percent about the disclosed mechanical dimension that would also achieve a stated purpose or function of the disclosed mechanical dimension. These or similar variances can be applicable to other contexts in which a term of degree is utilized herein such as relative position of a disclosed element, speed of a disclosed motor in rotations per minute (or other suitable metric), accuracy of measurement of a physical effect (*e.g.,* a heading measurement, an acceleration measurement, a relative velocity, *etc.*) or the like. In addition to the foregoing, it should be understood that the drawings appended to this specification are not drawn to scale, unless explicitly stated in the description herein or on the drawing.

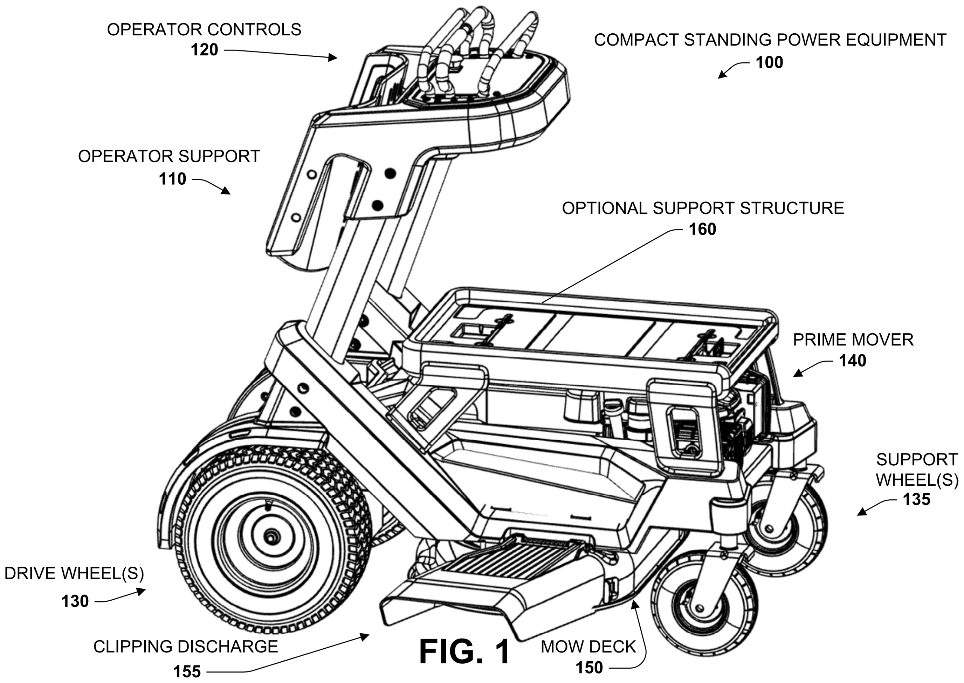

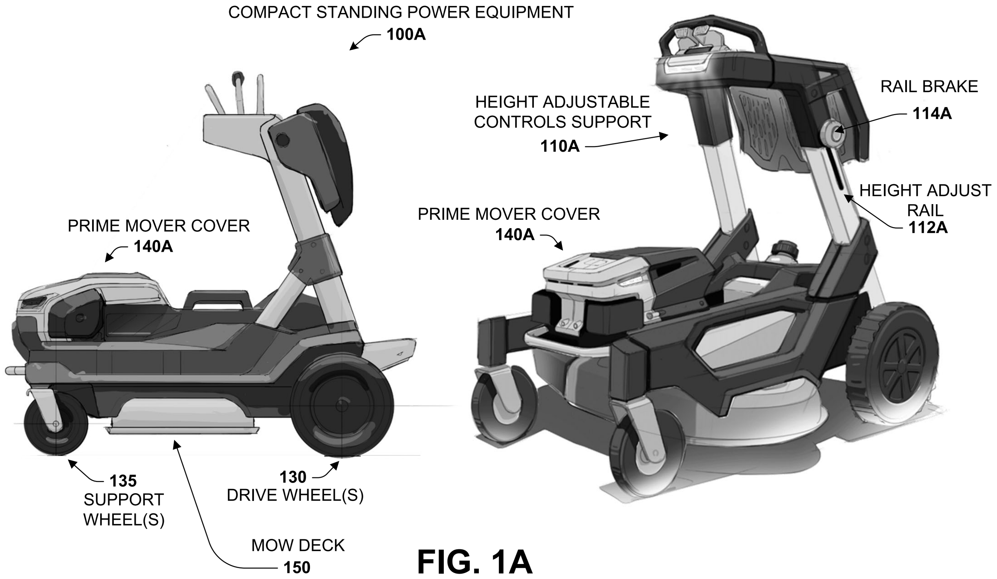

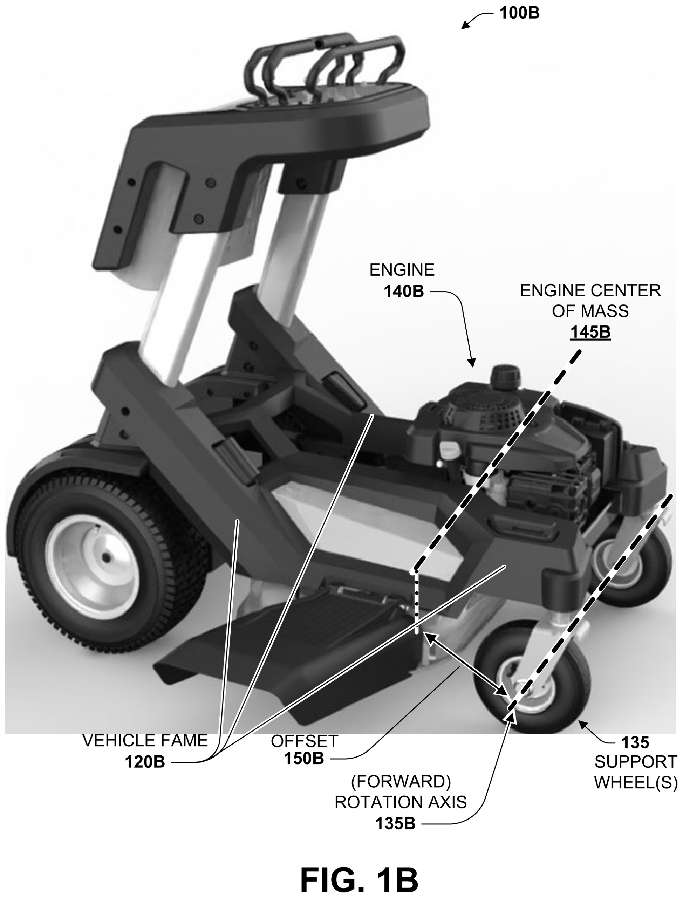

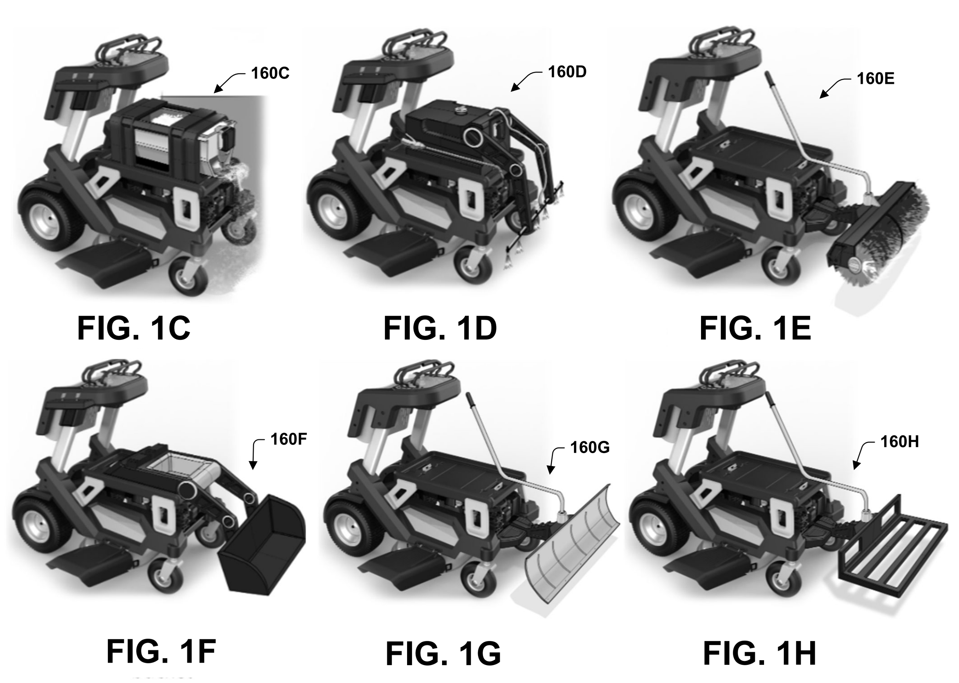

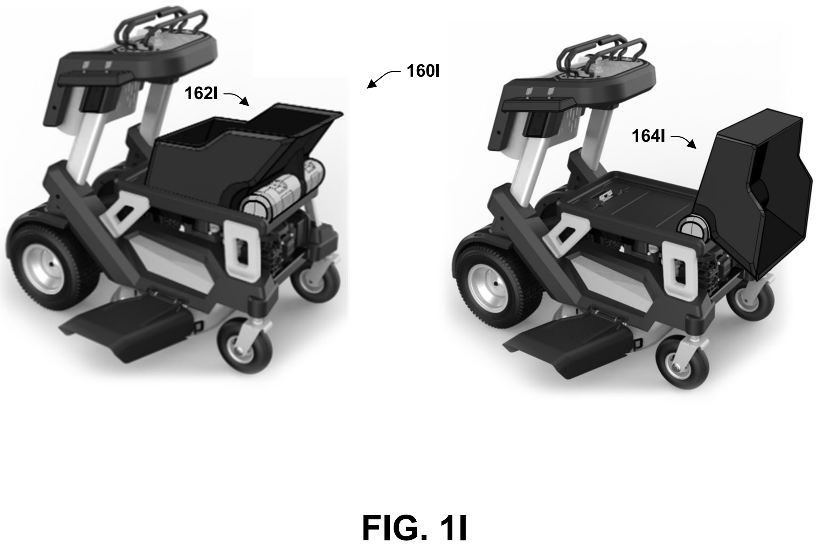

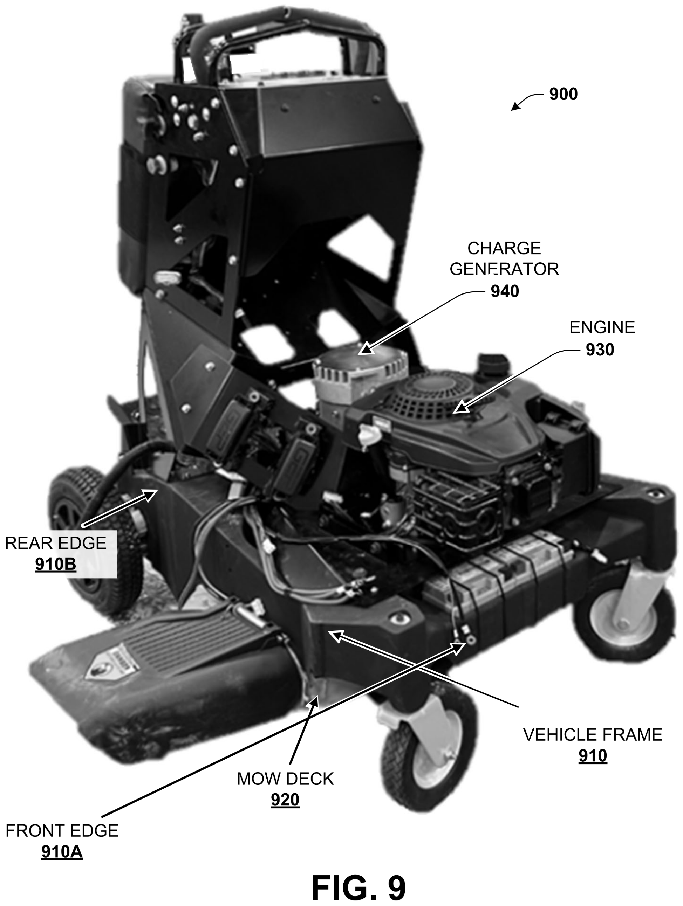

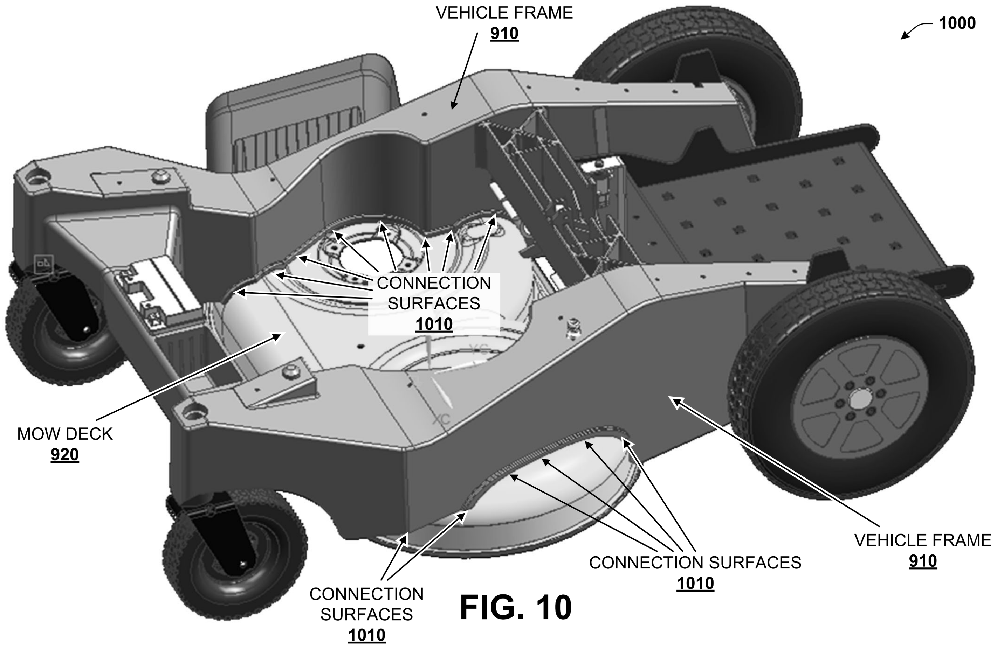

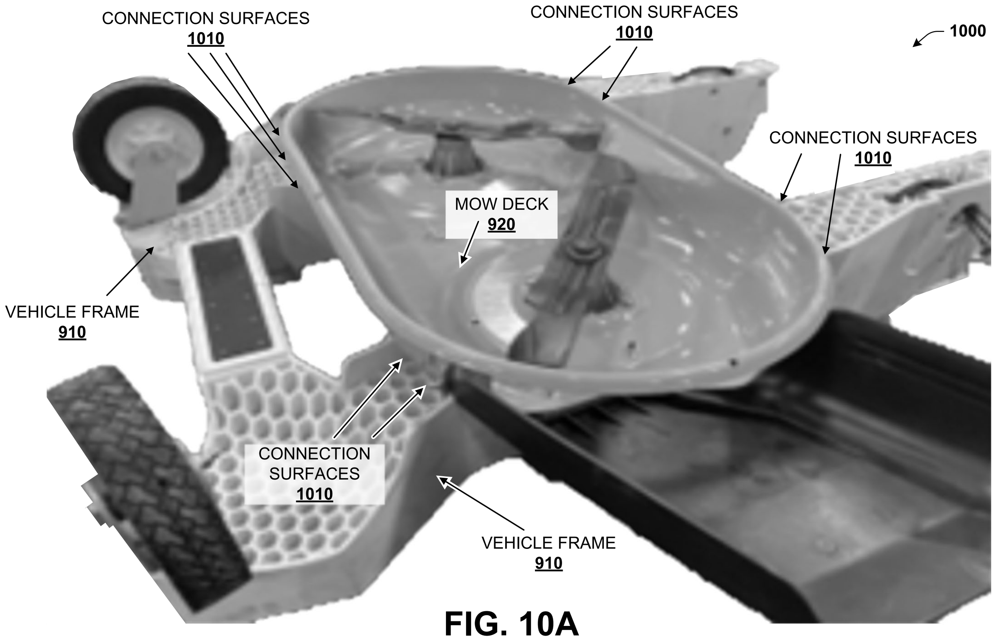

Referring now to Figure 1 a compact standing power equipment 100 is depicted. Power equipment 100 can be a standing lawn mower, in various aspects of the present disclosure, comprising a mow deck 150 secured to a frame (*e.g*., see Figures 9, 10 and 10A, *infra*) movable over a surface by a drive element, depicted as drive wheel(s) 130 in Figure 1, and optionally including one or more support wheel(s) 135. Although the drive element(s) of Figure 1 are shown as drive wheel(s) 130, in other aspects drive wheel(s) 130 can be replaced by rotatable tracks, or other suitable drive structures for a power equipment 100. A clipping discharge 155 can be secured to mow deck 150 in some aspects of the disclosed embodiments. However, in other aspects a mulching cover (not depicted) can replace clipping discharge 155 or a bagging apparatus (not depicted) can replace clipping discharge 155 in yet other aspects of the disclosed embodiments.

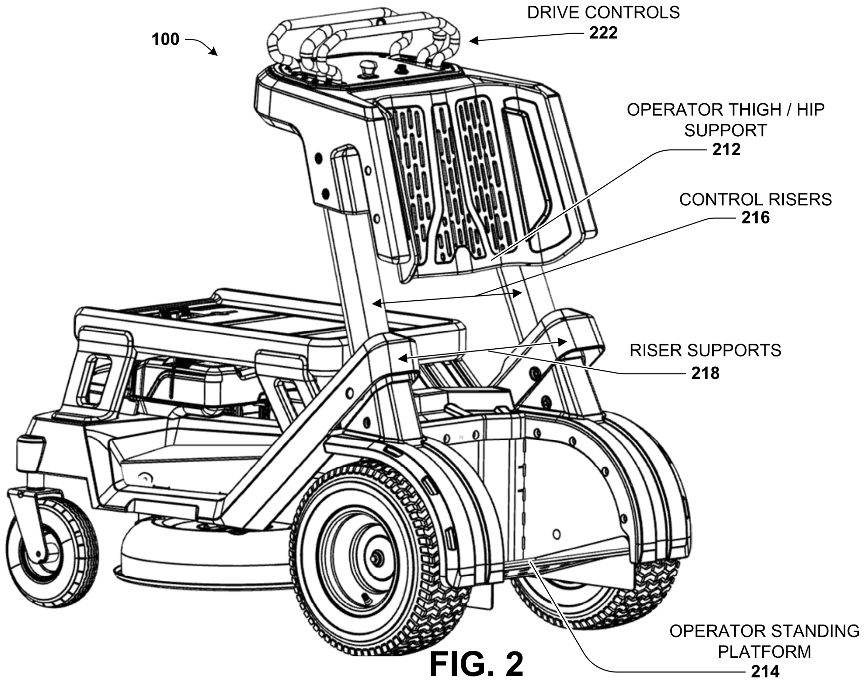

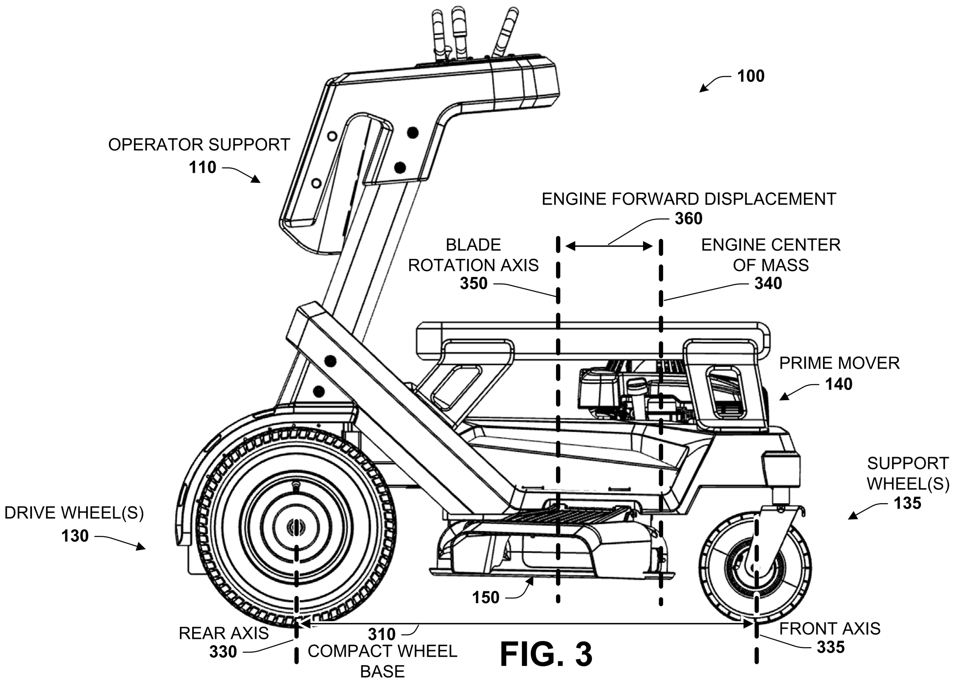

Also shown is an operator support 110 secured to power equipment 100 including a set of operator controls 120. Operator controls 120 can be configured to enable a person standing adjacent operator support 110 to drive, steer, and otherwise control power equipment 100. Operator support 100 can be situated above a stand-on platform (*e.g*., see Figures 2 and 3, *infra*) and can overlie or be positioned forward of a rotation axis of the drive element. In one or more embodiments, operator controls 120 can optionally activate one or more detachable powered implements secured to an optional support structure 160 (*e.g.,* see Figures 1C - 1I, *infra*)*.*

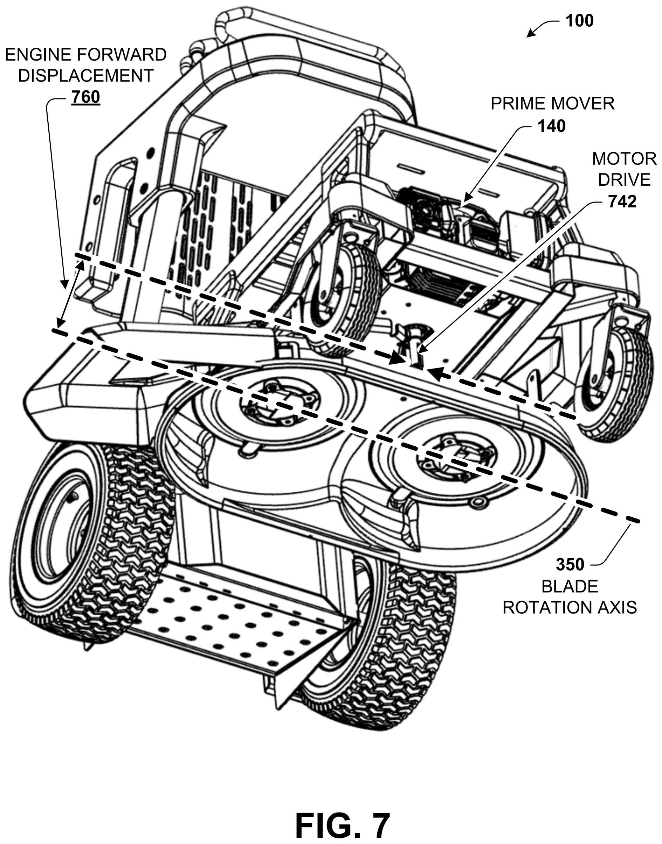

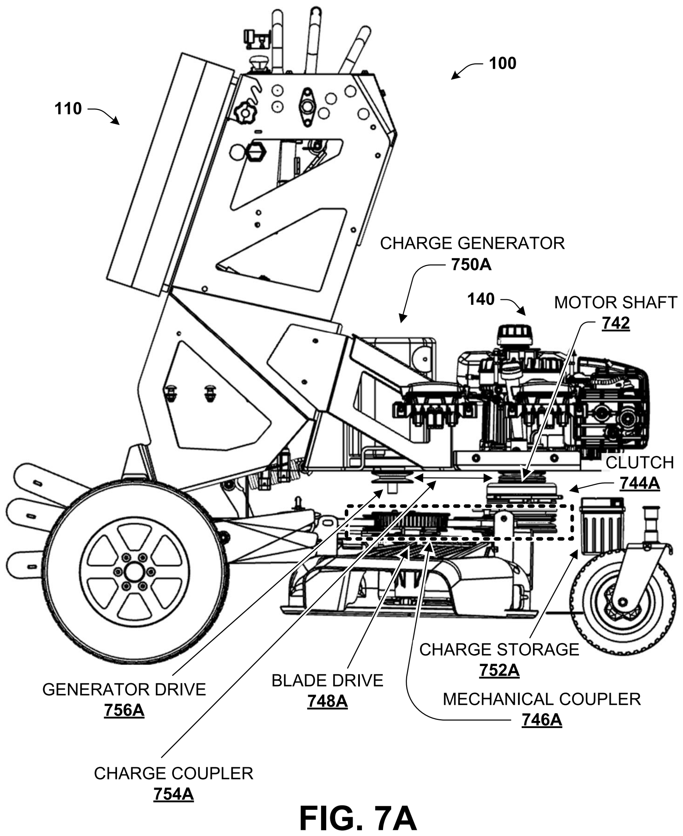

A prime mover 140 is shown for generating power for power equipment 100. Prime mover 140 can be a combustion engine, such as a gasoline or diesel engine or the like (*e.g*., hydrogen fuel cell power unit), or can be a hydraulic motor or pneumatic motor or other suitable source of mechanical power. Power equipment 100 can further comprise a charge generator (not depicted - but see Figures 7A and 9, *infra*) mechanically coupled to prime mover 140 that generates electrical charge in response to mechanical power output by prime mover 140. In some aspects of the disclosed embodiments, the charge generator (*e.g*., an alternator, or the like) can be coupled to a motor drive output *(e.g.,* see Figures 7 and 7A, *infra*) of prime mover 140, or can be coupled to a mechanical coupler (*e.g*., gearing exchange, belt(s) and pulley(s) exchange, or the like, or a suitable combination of the foregoing) that transfers mechanical power from the motor drive to a blade assembly associated with mow deck 150 (not depicted, but see Figures 3, 7A and 9, *infra*)*,* or can be coupled to a blade drive of the blade assembly, or other suitable mechanical coupling. Power equipment 100 can also comprise one or more batteries for storing electrical charge (*e.g*., see Figure 7A) generated by the charge generator, and a charge controller (not depicted) for distributing charge from the charge controller to the battery(ies) and for distributing charge from the charge generator or the battery(ies) to an electric motor of power equipment 100. For instance, a drive element(s) of power equipment 100 can include one or more electric motors powered by electric charge distributed by the charge controller from the charge generator, from the battery(ies), or the like, or a suitable combination of the foregoing.

In some aspects of the disclosed embodiments, prime mover 140 can itself be an electric motor. In such aspects, power equipment 100 can include one or more rechargeable batteries for powering prime mover 140, a blade assembly motor, or one or more drive motors, as suitable. Additionally in such embodiments, a hydraulic drive can be added to provide mechanical power to the drive elements (*e.g*., drive wheels 135) of power equipment 100, and in such embodiments the electric motor can power the blade assembly separate from the hydraulic drive.

Figure 1A shows graphic drawings of a compact standing power equipment 100A in further aspects of the disclosed embodiments. Power equipment 100A is shown without optional support structure 160 of power equipment 100 of Figure 1, *supra.* Additionally, power equipment 100A includes a prime mover cover 140A comprising a housing that overlies prime mover 140. Prime mover cover 140A can include one or more air intakes and air outtakes, one or more cooling structures, one or more exhaust structures, or the like, as suitable. Additionally, prime mover cover 140A can be removed to facilitate service to a prime mover positioned beneath prime mover cover 140A, as would be understood to one of ordinary skill in the art. In alternative or additional aspects of the disclosed embodiments, power equipment 100A can include a height adjustable operator support 110A. Height adjustable operator support 100A can be raised or lowered along a height adjust rail 112A, as shown, and can be locked in a chosen position (or height) by activating a rail brake 114A. Deactivating rail brake 114A can unlock height adjustable operator support 110A from the chosen position to allow an operator to select a new height, and re-activate rail brake 114A to lock height adjustable operator support 100A at the new height.

Figure 1B depicts a standing power equipment 100B having a vehicle frame 120B and a combustion engine 140B positioned near a front edge of vehicle frame 120B. Engine 140B can have a front face approximately coplanar with a front surface of vehicle frame 120B. Additionally, power equipment 100B can have one or more support wheels 135 attached near the front surface of vehicle frame 120B. For instance, a left support wheel 135 can be secured at a left front corner of vehicle frame 120B, and a right support wheel 135 can be secured at a right front corner of vehicle frame 120B. Moreover, the front face of engine 140B can at least in part overlie support wheels 135. In still further embodiments, a plane intersecting a center of mass 145B of engine 140B can be offset 150B from a rotation axis plane (parallel to the center of mass plane) of support wheels 135 by an offset distance. Particularly, the rotation axis plane can intersect a rotation axis of support wheels 135 when power equipment 100B is moving in a forward direction (*e.g*., a forward rotation axis 135B). The offset distance can be about eighteen (18) inches or less, in some aspects of the disclosed embodiments. In other aspects, offset distance can be fifteen (15) inches or less, twelve (12) inches or less, ten (10) inches or less, eight (8) inches or less, or six (6) inches or less. Moreover, center of mass 145B of engine 140B can be offset from a center of rotation of a blade(s) rotating within the mow deck of power equipment 100B by a second offset distance (*e.g.,* see Figure 3, *infra*)*.* Various embodiments can incorporate offset 150B in conjunction with the second offset distance in a single power equipment device.

Figures 1C, 1D, 1E, 1F, 1G, 1H and 1I (referred to hereinafter collectively as Figures 1C - 1I) depict alternative embodiments of a disclosed power equipment in which a removable device is secured to an optional support structure 160 of the disclosed power equipment (*e.g.,* see Figure 1), or a vehicle frame 120B of the disclosed power equipment (*e.g.,* see Figure 1B), or a combination of the foregoing. Figure 1C depicts a detachable spreader device 160C secured to optional support platform 160 in an aspect(s); Figure 1D illustrates a detachable liquid sprayer device 160D secured to optional support platform 160 in another aspect(s); Figure 1E depicts a detachable rotating brush secured to a front of vehicle frame 120B in still another aspect(s); Figure 1F depicts a detachable scoop and lift device 160F secured to optional support platform 160 in yet another aspect(s); Figure 1G illustrates a detachable plow device 160G secured to the front of vehicle frame 120B in additional aspects; Figure 1H depicts a detachable level device 160H secured to the front of vehicle frame 120B in yet another aspect(s); Figure 1I illustrates a detachable powered dump device 160I in still further aspects of the present disclosure, including a dump bucket in a storage and carry position 162I and a forward dump position 164I.

Referring now to Figure 2, compact standing power equipment 100 is shown from a rear perspective view, showing an operator thigh/hip support 212 of operator support 110 (as shown in Figure *1**, supra*)*.* Operator support 110 is also shown having control risers 216 spaced apart over drive elements (*e.g*., drive wheels 130) that are structurally reinforced by riser supports 218. Drive controls 222 are located at a top of operator support 110 as depicted. Likewise, an operator standing platform 214 is positioned between control risers 216 (and drive wheels 130). In one or more aspects of the disclosed embodiments, each drive wheel 130 is secured to opposing sides of a vehicle frame (*e.g.,* vehicle frame 120B of Figures 1B, *supra*) by a drive element comprising a drive transmission and a drive power source contained at least in part within a drive housing (not depicted). For instance, a left drive housing can be secured to a left side of the rear of vehicle frame 120B containing a left drive transmission and a left drive power source, and a left drive wheel 130 can be secured to the left drive housing and thereby secured to the left side of the rear of vehicle frame 120B. Similarly, a right drive housing can be secured to a right side of the rear of vehicle frame 120B containing a right drive transmission and a right drive power source, and a right drive wheel 130 can be secured to the right drive housing and thereby secured to the right side of the rear of vehicle frame 120B.

Referring to Figure 3, there is shown a side view of compact standing power equipment 100 depicting further aspects of the disclosed embodiments. Figure 3 depicts a compact wheelbase 310 between a front axis of rotation 335 of support wheel(s) 135 (in forward movement) and a rear axis of rotation 330 of drive wheel(s) 130. Wheelbase 310 can be forty eight (48) inches or less, in an aspect(s) of the disclosed embodiments. In another aspect(s), wheelbase 310 can be about forty four (44) inches or less; in an additional aspect(s), wheelbase 310 can be about forty (40) inches or less; in yet another aspect(s), wheelbase 310 can be about thirty six (36) inches or less; in at least one additional aspect(s), wheelbase 310 can be about thirty four (34) inches or less.

In addition to the foregoing, the side view of compact standing power equipment 100 depicts an engine forward displacement 360 between an engine center of mass 340 and a blade rotation axis 350. Engine forward displacement 360 can result from a forward position of engine center of mass 340 relative a mow deck 150 of power equipment 100. In one or more aspects of the disclosed embodiments, engine forward displacement 360 can be about eighteen (18) inches or less; in other aspects engine forward displacement 360 can be about fifteen (15) inches or less; in yet another aspect(s) engine forward displacement 360 can be about twelve (12) inches or less; in further aspects engine forward displacement 360 can be about ten (10) inches or less; in yet another aspect engine forward displacement 360 can be about eight (8) inches or less, and in still other aspects engine forward displacement 360 can be about six (6) inches or less.

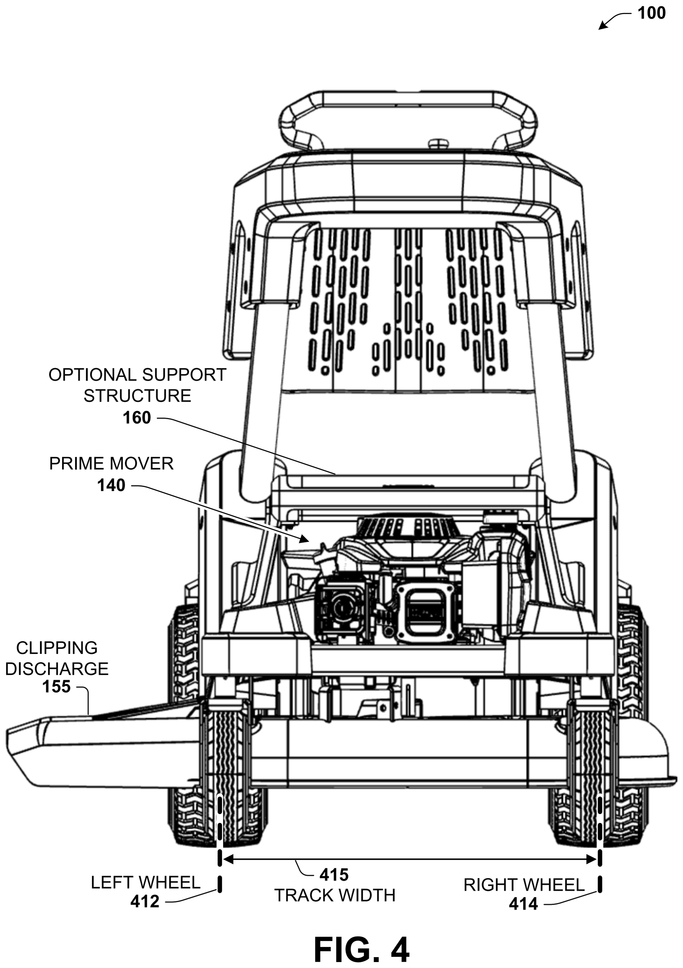

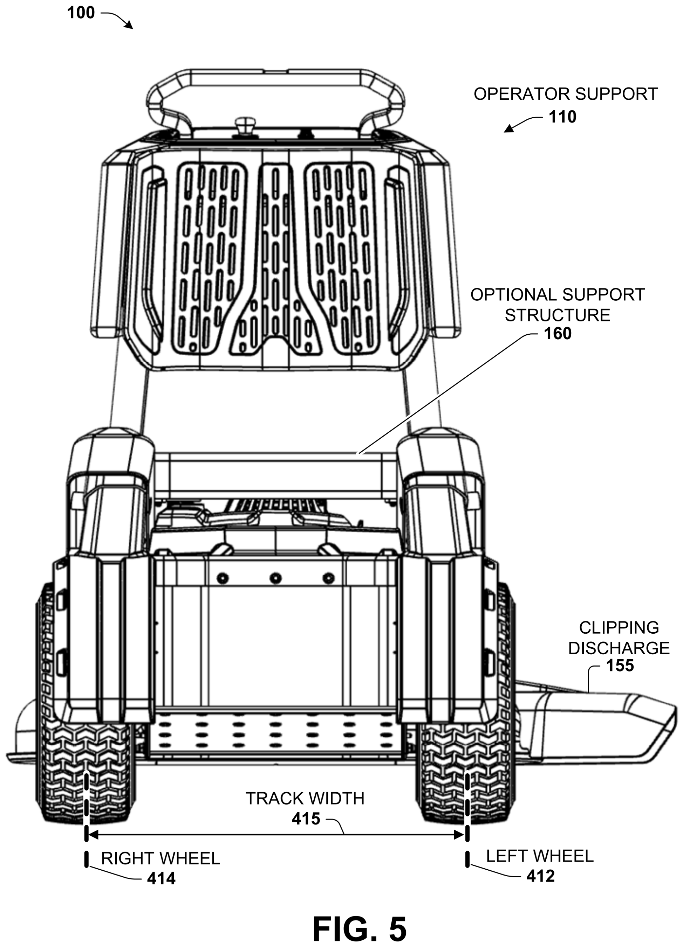

Figures 4 and 5 show front and rear views, respectively, of a compact standing power equipment 100 in further aspects of the disclosed embodiments. Shown is a track width 415 defining a distance between a center of left (rear drive) wheel 412 and a center of right (rear drive) wheel 414. Track width 415 can be thirty six (36) inches or less in some aspects of the disclosed embodiments; thirty four (34) inches or less in further aspects; thirty three (33) inches or less in another aspect; thirty two (32) inches or less in still other aspects; and thirty one (31) inches or less in still additional aspects.

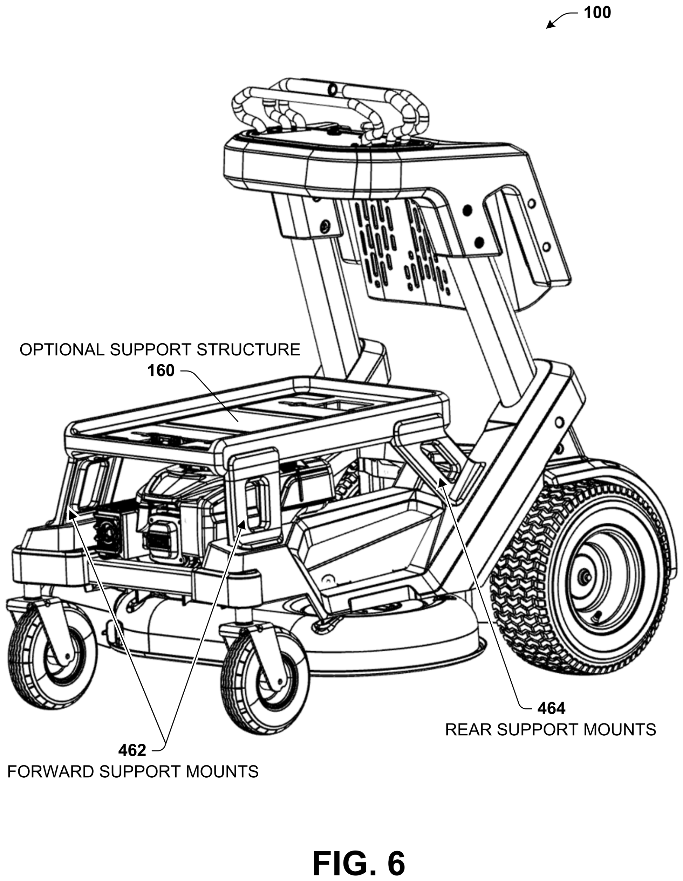

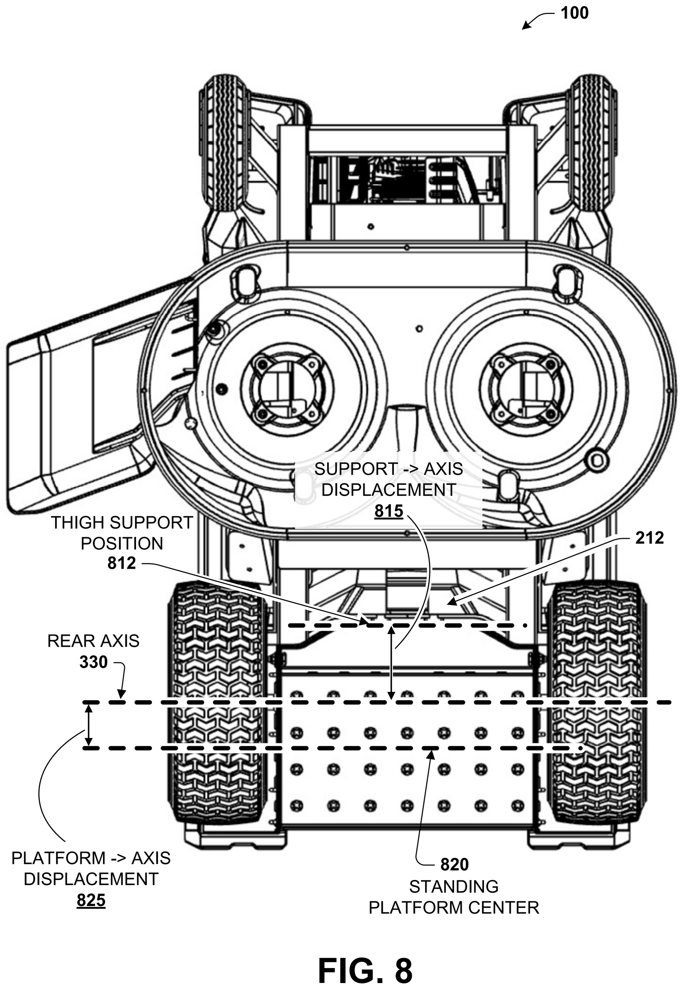

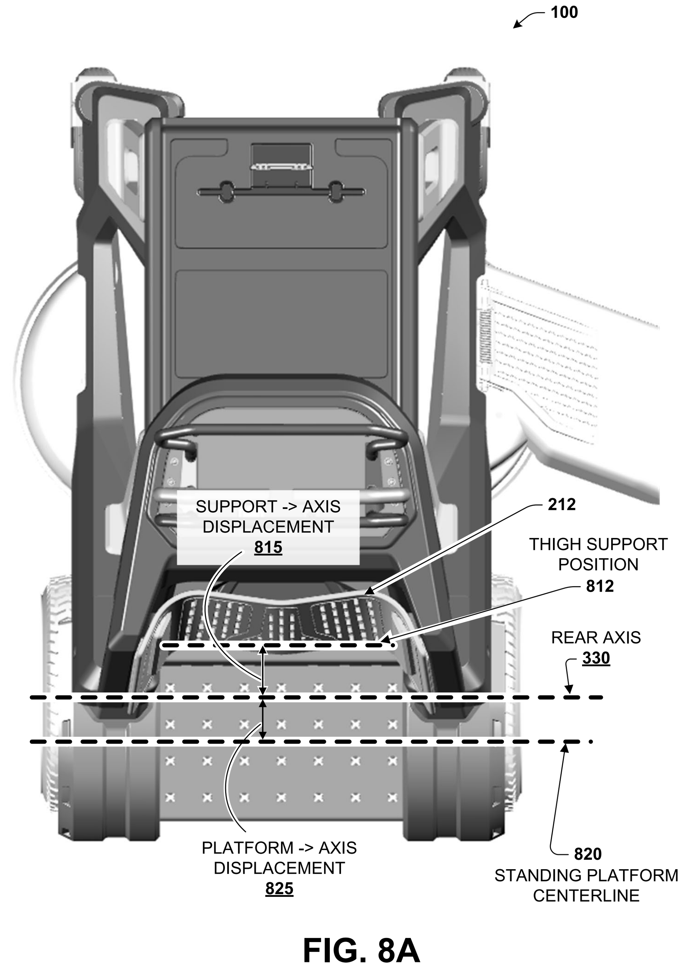

Figure 6 depicts optional support structure 160 overlying prime mover 140 of compact standing power equipment 100. Forward support mounts 462 can secure optional support structure 160 near a front of vehicle frame 120B. Rear support mounts 464 can secure optional support structure 160 near a fear of vehicle frame 120B, or at control risers 216, riser supports 218, or the like, or a suitable combination of the foregoing. A bottom perspective view, bottom view and overhead view are depicted in Figures 7, 7A, 8 and 8A, respectively. As is shown, a blade rotation axis 350 can be offset from a motor drive 742 of prime mover 140 by engine forward displacement 760. Motor drive 742 can be a drive shaft, motor drive, motor drive output, or the like, that provides mechanical power output from prime mover 140. A mechanical coupling 746A (shown in Figure 7A) can transfer mechanical work from motor drive 742 to a blade drive 748A of a blade assembly driving a blade about blade rotation axis 350. The mechanical coupling 746A transfers the mechanical work rearward along the vehicle frame 120B from prime mover 140 to blade drive 748A, in at least some aspects of the disclosed embodiments. In some aspects of the disclosed embodiments, a charge generator 750A can be positioned between prime mover 140 and operator support 110. Charge generator 750A can be an alternator, a dynamo, or other suitable charge generator and can be coupled to charge storage 752A (*e.g.,* a battery(ies)) for storing charge. Charge generator 750A can be approximately over the blade assembly and blade drive 748A, as is evident from Figure 7A. Moreover, charge generator 750A can include a generator drive 756A mechanically coupled to motor shaft 742 by way of a charge coupler 754A (e.g., belt(s) and pulley(s), gear connector, secondary drive shaft connector, and so on) in still further aspects of the disclosed embodiments.

Figure 8 depicts a platform -> axis displacement 825 between a rear axis of rotation 330 of drive wheels 130 and a centerline 820 of an operator standing platform 214. Further, Figures 8 and 8A show a thigh support position 812 of an operator thigh/hip support 212 of operator support 110, in further aspects of the disclosed embodiments. A thigh support -> axis displacement 815 can be defined between a plane intersecting thigh support position 812 and a parallel plane intersecting rear axis 330. Platform -> axis displacement 825 can be about six (6) inches or fewer, in some aspects, three (3) inches or fewer in other aspects, about zero inches in yet another aspect(s), negative three (-3) inches or more in another aspect (where negative distance indicates a displacement in front of rear axis 330, rather than behind rear axis relative to a front and rear of power equipment 100), negative six (-6) inches or more in still other aspects. Thigh support -> axis displacement 815 can be approximately twelve (12) inches or shorter in some aspects; about eight (8) inches or fewer in another aspect(s); about six (6) inches or fewer in yet other aspects; three (3) inches or fewer in still further aspects, or about zero inches in still another aspect.

Figure 9 illustrates a compact standing mowing device 900 according to additional aspects of the disclosed embodiments. Mowing device 900 shows a vehicle frame 910 having a front edge 910A and a rear edge 910B separated from the front edge 910A by a frame depth. Engine 930 is secured to vehicle frame 910 near front edge 910A and charge generator 940 (*e.g.,* alternator, *etc.*) is behind engine 930 toward rear edge 910B. A blade assembly, blade drive and one or more blades within mow deck 920 can be secured to vehicle frame 910 behind engine 930 and approximately below charge generator 940 (*e.g.,* see Figure 7A, *supra*)*.*

Figures 10 and 10A depict drawings of vehicle frame 910 and mow deck 920 according to one or more further aspects of the disclosed embodiments. Mow deck 920 can be a metal material in some aspects of the disclosure, such as steel, stainless steel, a steel alloy, aluminum, an aluminum alloy, or the like, or a suitable combination of the foregoing. In alternative embodiments, mow deck 920 can be a plastic material, or a composite material (*e.g*., a composite fiber material, a composite carbon material, a composite carbon fiber material, a composite fiberglass material, a composite carbon and fiberglass material, *etc.*)*.* Vehicle frame 910 can be a plastic material, such as an injection molded plastic material in one or more embodiments of the disclosure. In alternative embodiments, vehicle frame 910 can be a metal material, or a composite material (*e.g*., a composite fiber material, a composite carbon material, a composite carbon fiber material, a composite fiberglass material, a composite carbon and fiberglass material, *etc.*)*.* Vehicle frame 910 can define connection surfaces 1010 in which physical contact between mow deck 920 and vehicle frame 910 is provided. Connection surfaces 1010 can provide physical contact for a chemical bonding agent, such as an epoxy or the like, to secure mow deck 920 to vehicle frame 910. As depicted, mow deck 920 can be secured to an underside of vehicle frame 910, in some aspects. Figure 10A depicts an underside view of mow deck 920 and vehicle frame 910. Connection surfaces 1010 are shown by which mow deck 920 can be secured to vehicle frame 910 by an adhesive, epoxy or other chemical bonding agent. In alternative embodiments of the present disclosure, mow deck 920 can be suspended underneath vehicle frame 910 a variable distance. A deck lifting mechanism (not depicted) can vary the distance between a top surface of mow deck 920 and a bottom surface of vehicle frame 910, in such embodiments.

In regard to the various functions performed by the above described components, machines, devices, processes and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the embodiments. In this regard, it will also be recognized that the embodiments include a machine as well as mechanical hardware configured to implement the functions.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be limited to those illustrations. Rather, any suitable combination or subset of elements from one drawing(s) can be applied to other combinations or subsets of elements in other drawings where suitable to one of ordinary skill in the art to accomplish objectives or functions disclosed herein, known in the art, or reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

Based on the foregoing it should be understood that the examples and embodiments described herein are for illustrative purposes only and that various modifications or changes in light thereof will be suggested to persons skilled in the art and are to be included within the spirit and purview of this application and scope of the appended claims.

## Claims

1. A stand-on mowing apparatus, comprising:
a frame, the frame having a frame front and a frame rear offset from the frame front in a depth direction by a frame depth;
a drive element secured to the frame near the frame rear and adapted to, at least in part, convey the stand-on mowing apparatus over a surface;
an operator platform secured to the frame near the frame rear and having a platform front offset from a platform rear by a platform depth, wherein a centerline of the platform depth is offset from a drive axis of the drive element in a first depth direction toward the frame rear by six inches or fewer;
a mow deck secured to the frame between the frame front and the frame rear;
a blade assembly including a blade drive and a blade operationally coupled to the blade drive, wherein the blade rotates within the mow deck about a blade rotation axis in response to mechanical work provided by the blade drive to the blade;
a prime mover for generating mechanical power at a drive shaft; and
a mechanical coupler for transferring the mechanical power from the drive shaft to the blade drive of the blade assembly.

2. The stand-on mowing apparatus of claim 1, wherein the centerline of the platform depth is approximately equal to the drive axis or is offset from the drive axis in a second depth direction toward the frame front.

3. The stand-on mowing apparatus of claim 1 or 2, wherein the drive shaft is positioned forward of the blade drive in a second depth direction toward the frame front, and the mechanical coupler transfers the mechanical power in the first depth direction toward the frame rear from the drive shaft to the blade drive.

4. The stand-on mowing apparatus of any preceding claim, wherein:
the prime mover is positioned forward of the blade assembly in a second depth direction toward the frame front; and
a center of mass of the prime mover is offset from the blade drive in the second depth direction, wherein the prime mover is offset by one of: a first range of eighteen or fewer inches, fifteen or fewer inches, twelve or fewer inches, ten or fewer inches, eight or fewer inches or six or fewer inches from the blade drive in the second depth direction.

5. The stand-on mowing apparatus of any preceding claim, wherein the drive element further comprises:
a left rotation and drive element secured to a left side of the frame near the frame rear; and
a right rotation and drive element secured to a right side of the frame near the frame rear and wherein the operator platform is positioned between the left side of the frame and the right side of the frame and at least in part between the left rotation and drive element and the right rotation and drive element.

6. The stand-on mowing apparatus of claim 5, wherein:
the left rotation and drive element includes a left rotation element and a left drive element, the left drive element further comprises one or more electric motors and a left transmission adapted to transfer mechanical power generated by the electric motors to rotate the left rotation element, wherein the left transmission and the one or more electric motors are contained within a housing located between the left side of the frame near the frame rear and the left rotation element;
the right rotation and drive element includes a right rotation element and a right drive element, the right drive element further comprises one or more additional electric motors and a right transmission, wherein the right transmission and the one or more additional electric motors are contained within a second housing located between the right side of the frame near the frame rear and the right rotation element; and
the operator platform is positioned at least in part between the housing containing the one or more electric motors and the left transmission and the second housing containing the one or more additional electric motors and the right transmission.

7. The stand-on mowing apparatus of claim 6, further comprising:
a charge generator operationally coupled to the drive shaft, the blade drive or the mechanical coupler, wherein the charge generator is adapted to generate electrical charge in response to mechanical power generated by the prime mover;
a battery for storing the electrical charge; and
a charge controller for powering the one or more electric motors from the electrical charge,
wherein, optionally, the prime mover is a combustion engine.

8. The stand-on mowing apparatus of claim 7, further comprising a support wheel secured to the frame near the frame front, wherein the center of mass of the prime mover is eighteen inches or less from a support wheel rotation axis of the support wheel.

9. The stand-on mowing apparatus of claim 8, wherein the center of mass of the prime mover is eight inches or less from the support wheel rotation axis of the support wheel when the stand-on mowing apparatus is moving in a forward direction.

10. The stand-on mowing apparatus of any of claims 1 to 4, wherein:
the drive element further comprises a right drive element secured to a right side of the frame, a left drive element secured to a left side of the frame and a support wheel secured to a front of the frame, wherein a distance between the right drive element and the left drive element defines a track width of the stand-on mowing apparatus, and a second distance between a drive element rotation axis of the right drive element and a support rotation axis of the support wheel defines a wheelbase of the stand-on mowing apparatus;
the wheelbase is less than about forty eight (48) inches; or
the track width is less than about thirty six (36) inches.

11. The stand-on mowing apparatus of claim 10, wherein:
the wheelbase is less than about one of: forty four (44) inches, forty (40) inches, thirty six (36) inches, or thirty four inches; and/or
the track width is less than about one of: thirty four (34) inches, thirty three (33) inches, thirty two (32) inches or thirty one inches.

12. The stand-on mowing apparatus of any preceding claim, wherein the prime mover is secured to the frame toward the frame front forward of the blade drive of the blade assembly.

13. The stand-on mowing apparatus of claim 12, wherein the blade drive defines a blade spindle rotation axis and a distance between a center of mass of the prime mover and the blade spindle rotation axis is about eighteen to about six inches.

14. The stand-on mowing apparatus of claim 1, wherein a distance between a center of mass of the prime mover and the blade rotation axis is greater than six inches.

15. The stand-on mowing apparatus of claim 14, wherein:
the distance between a center of mass of the prime mover and the blade rotation axis is greater than twelve inches; and/or
the distance between a center of mass of the prime mover and the blade rotation axis is eighteen inches or less.
